# EUROPÄISCHE PATENTANMELDUNG

(11) **EP 1 331 074 A1**
(43) Veröffentlichungstag der Anmeldung: **30.07.2003**
(21) Anmeldenummer: 03000563.1
(22) Anmeldetag: 13.01.2003
(51) Int. Cl.: B29C 33/72, C08K 5/09

(54) **Nitrilkautschukmischungen mit geringer Formverschmutzungsneigung**

(30) Priorität: 23.01.2002 DE 10202370
(71) Anmelder: Bayer Aktiengesellschaft, 51368 Leverkusen (DE)
(72) Erfinder: Parg, Roland, Dr., 51373 Leverkusen (DE); Magg, Hans, Dr., 51515 Kürten (DE); Marinelli, Luigi, 51373 Leverkusen (DE); Wassen, Jürgen, Dr., 51381 Leverkusen (DE); Wendling, Peter, 51375 Leverkusen (DE); Winkelbach, Hans-Rafael, Dr., Brights Grove ON N0N 1C0 (CA); Oppenheimer-Stix, Christiane, Dr., 41468 Neuss (DE); Strauch, Hans-Christian, Dr., 41540 Dormagen (DE); Lambert, Jean-Pierre, 67000 Strasbourg (FR)

(57) **Zusammenfassung**

Die Erfindung betrifft ein Verfahren zur Verringerung der Formverschmutzung in einem Spritzgussverfahren durch Verwendung einer Mischung von Nitrilkautschuken, im Bereich von 0,1-0,5 Gew.-% an Fettsäuren sowie gegebenenfalls weitere Additive.

## Beschreibung

Die Erfindung betrifft ein Verfahren zur Verringerung der Formverschmutzung in einem Spritzgussverfahren durch Verwendung einer Mischung von Nitrilkautschuken, im Bereich von 0,1-0,5 Gew.-% an Fettsäuren sowie gegebenenfalls weitere Additive.

Heutzutage werden Formkörper überwiegend im Spritzgussverfahren hergestellt. Hierbei wird eine visco-elastische Mischung in eine Form eingepresst, dort, gegebenenfalls unter Druck, erhitzt und anschließend aus der Form entfernt.

In einem Spritzgusszyklus durchläuft eine Gummimischung bis zur Formfüllung ein Druckprofil.

In der Einspritzphase im Bereich der Kapillare wird rasch hoher Druck aufgebaut und die Gummimischung einem hohen Schergradienten unterworfen. An der Einspritzdüse kommt es zu einer markanten Entspannung mit der Gefahr, dass niedermolekulare Bestandteile der Gummimischung durch "Flashverdampfung" stören können. Für den Prozess der Formfüllung, in dessen Verlauf der Druck bis zur vollständigen Formfüllung wieder leicht ansteigt, ist anzunehmen, dass Zuschlagstoffe, die über Entmischungsprozesse an der Oberfläche der Mischungsfront konzentriert sind nicht mehr von der Mischung aufgenommen werden und so Oberflächenfehler bis zu mangelnde Mischungsverschweißung verursachen können.

Die thermodynamische Erklärung dafür geht von einem Scherfeld aus, unter dessen Einfluss sich ein Entropiegradient im Polymer ausbildet, der einen Diffusionsstrom von außen zum Zentrum des Stromes erzeugt der zur Anreicherung von niedermolekularen Bestandteilen an der äußeren Schicht der Strömung führt.

Chemikalien, die infolge dieses Prozesses überdies die Reibung der Gummimischung an einer Kapillarwand herabsetzen - also Wandgleiten verursachen - sind klassische Verarbeitungswirkstoffe wie sie in der Gummiindustrie breit eingesetzt werden.

Um möglichst hohe Produktionszyklen zu erreichen, darf hierbei die Form, in der Regel eine Metallform, nicht durch Rückstände der Kautschukmischung verunreinigt werden. Lassen sich die fertigen Formkörper nur unter Verbleib einer Schicht aus der Form entnehmen, so spricht man von Formverschmutzung. Selbst kleine Rückstandsmengen summieren sich nach mehreren Zyklen zu nicht mehr tolerierbaren Schichten auf.

Häufig werden den Kautschukmischungen deshalb sogenannte Entformungshilfen zugegeben. Diese können jedoch ihrerseits wiederum zu unerwünschten Belägen führen.

Wir haben nun gefunden, dass eine Nitrilkautschuk-enthaltende Kautschukmischung, die im Bereich von 0,1-0,5 Gew.-% an Fettsäuren enthält, eine besonders geringe Formverschmutzung im Spritzgussverfahren bei gleichzeitig guter Entformbarkeit bewirkt. Weiterhin haben wir gefunden, dass eine Nitrilkautschuk-enthaltende Kautschukmischung, die im Bereich von 0,1-0,5 Gew.-% an Fettsäuren enthält, eine besonders kurze Ruß-Einmischzeit besitzt.

Gegenstand der Anmeldung ist somit ein Verfahren zur Verringerung der Formverschmutzung in Spritzgussverfahren von Nitrilkautschuk, dadurch gekennzeichnet, dass man eine Mischung enthaltend einen oder mehrere Nitrilkautschuke und im Bereich von 0,1-0,5 Gew.-% an Fettsäuren sowie gegebenenfalls weitere Additive und/oder Füllstoffe, einsetzt.

Unter Nitrilkautschuken werden Dien-(Meth-)Acrylnitril-Copolymerisate verstanden. Isopren und insbesondere Butadien sind hierbei bevorzugte Diene. Die Copolymerisate besitzen einen Gehalt an copolymerisierten Acrylnitril- und/oder Methacrylnitrileinheiten von 5 bis 60, vorzugsweise 10 bis 50 Gew.-%.

Weiterhin werden ausdrücklich hydrierte Nitrilkautschuke unter dem Begriff subsummiert. Unter "hydriertem Nitrilkautschuk" oder "HNBR" sollen im Sinne dieser Erfindung Nitrilkautschuke, deren C=C-Doppelbindungen selektiv (d.h. ohne Hydrierung der C≡N-Dreifachbindung) teilweise oder vollkommen hydriert sind, verstanden werden. Bevorzugte hydrierte Nitrilkautschuke sind solche mit einem Hydriergrad, bezogen auf die vom Butadien stammenden C=C-Doppelbindungen, von mindestens 75, bevorzugt von mindestens 95, insbesondere von mindestens 98 %. Der Hydriergrad lässt sich NMR- und IR-spektroskopisch bestimmen.

Die Hydrierung von Nitrilkautschuk ist bekannt aus US-A- 3 700 637, DE-A-2 539 132, DE-A-3 046 008, DE-A-3 046 251, DE-A-3 227 650, DE-A-3 329 974, EP-A-111 412 und FR-B-2 540 503, wobei die genannten Dokumente hiermit für die Zwecke der US-Patentpraxis als Referenz in die vorliegende Anmeldung aufgenommen werden. Hydrierter Nitrilkautschuk zeichnet sich durch hohe Reißfestigkeit, geringen Abrieb, niedrig bleibende Verformung nach Druck- und Zugbeanspruchung und gute Ölbeständigkeit, vor allem aber durch bemerkenswerte Stabilität gegen thermische und oxidative Einflüsse aus. Daher werden hydrierte Nitrilkautschuke im Rahmen der Erfindung bevorzugt.

Geeignete Nitrilkautschuke besitzen in der Regel Mooney-Viskositäten (DIN 53 523, ML 1+4) von 25 bis 100 ME, insbesondere 40 bis 80 ME.

Unter Fettsäuren versteht der Fachmann organische Säuren mit in der Regel im Bereich von 8 - 24 Kohlenstoffatomen. Insbesondere werden im Rahmen der vorliegenden Erfindung geradkettige Fettsäuren mit im Bereich von 12 bis 18 Kohlenstoffatomen bevorzugt, ganz besonders Fettsäuren mit 14 und 18 Kohlenstoffatomen oder Mischungen aus diesen beiden. Geradkettige Fettsäuren sind Fettsäuren mit einer geraden Anzahl an Kohlenstoffatomen.

Als weitere Additive kommen beispielsweise die dem Fachmann bekannten Vulkanisationsaktivatoren, insbesondere Metalloxide, wie Zinkoxid oder Magnesiumoxid, Alterungsschutzmittel, wie alkyl-substituierte Diphenylamine, Mercaptobenzimidazole, ungesättigte Ether, wie Vulkazon® AFD (Bayer AG, D) oder cyclische, ungesättigte Acetale, wie Vulkazon® AFS/LG (Bayer AG, D) in Frage. Weiterhin werden als Additive genannt:
- Weichmacher, insbesondere Carbonsäureester, wie Sebazinsäure und deren Derivate oder Trimellithsäure und deren Derivate
- Verarbeitungshilfsmittel, insbesondere Stearinsäure und deren Derivate, wie Zinkstearat oder Polymere, wie Poly-ethylenvinylacetat (Levapren® der Bayer AG, D) oder Poly-ethylenvinylacrylat /VAMAC® der DuPont).

Weiterhin kann es vorteilhaft sein, Füllstoffe in die erfindungsgemäße Kautschukmischung einzubringen. Diese können unverstärkend oder verstärkend sein.

Als Füllstoffe seien beispielsweise genannt:
- Ruße, wie MT-, GPF-, SRF- und vor allem FEF-Ruße,
- Metalloxide, wie Titandioxid (vor allem als Weißpigment)
- Silikate, wie Natrium-Aluminium-Silikat
- Kieselsäuren, insbesondere gefällte Kieselsäuren.
   Um den Abrieb zu verbessern, eignen sich bevorzugt sogenannte aktive Füllstoffe gemäß dem Vorschlag ISO 5794, Anhang D-Teil 1, z.B. veröffentlicht z.B. auf S. 535 des "Handbuch für die Gummiindustrie" der Bayer AG, 1992, Leverkusen.
- Tone, Glimmer, Talkum.

Zusätzlich kann es vorteilhaft sein, zusätzliche Aktivatoren zur Haftungsverbesserung zwischen Füllstoff und Kautschuk einzusetzen, wie z.B. Silane, wie Ucarsil® RC-1 (Union Carbide, US). Weiterhin können Pigmente zugegeben werden.

Die Mengen der einzelnen Komponenten der Mischung richten sich nach dem Einsatzzweck der Mischung und lassen sich durch wenige Vorversuche ermitteln.

In der Regel werden die Stoffe in folgenden Mengen eingesetzt (jeweils in phr = per hundred parts of rubber):
- Alterungsschutzmittel im Bereich von 0 bis 4 phr,
- Retarder im Bereich von 0 bis 2 phr,
- Metalloxide, wie ZnO im Bereich von 0 bis 30 phr,
- Füllstoffe im Bereich von 0 bis 150 phr, bevorzugt aktive Füllstoffe,
- Weichmacher im Bereich von 0 bis 20 phr,
- Verarbeitungshilfsmittel im Bereich von 0 bis 2 phr.

Ein weiterer Gegenstand der Erfindung ist ein Verfahren zur Verbesserung der Einmischbarkeit von Ruß in Nitrilkautschukmischungen, dadurch gekennzeichnet, dass man eine Mischung enthaltend einen oder mehrere Nitrilkautschuke und im Bereich von 0,1-0,5 Gew.-% an Fettsäuren sowie gegebenenfalls weitere Additive und/oder Füllstoffe, einsetzt.

Um vernetzbare Mischungen aus den erfindungsgemäßen Mischungen herzustellen werden den Kautschukmischungen Vernetzer zugegeben. Als Vernetzter eignen sich Peroxidsysteme, Schwefel und/oder Schwefelspendersysteme.

Bevorzugte Peroxidsysteme umfassen
Dialkylperoxide,
Ketalperoxide,
Aralkylperoxide,
Peroxidether,
Peroxidester, wie z.B.
Di-tert.-butylperoxid
Bis-(tert.-butylperoxyisopropyl)-benzol,
Dicumylperoxid,
2,5-Dimethyl-2,5-di(tert.-butylperoxy)-hexan,
2,5-Dimethyl-2,5-di(tert.-butylperoxy)-hexen-(3),
1,1-Bis-(tert.-butylperoxy)-3,3,5-trimethyl-cyclohexan,
Benzoylperoxid,
tert.-Butylcumylperoxid und
tert.-Butylperbenzoat.

Die Peroxidmengen liegen im Bereich von 1 bis 10 phr, vorzugsweise im Bereich von 4 bis 8 phr, bezogen auf Kautschuk. Die Vernetzung kann bei Temperaturen von 100 bis 200°C, vorzugsweise 130 bis 180°C, gegebenenfalls unter einem Druck von 10 bis 200 bar, erfolgen. Im Anschluss an die Vernetzung können die Vulkanisate durch Lagerung bei höherer Temperatur getempert werden.

Die Peroxide können vorteilhaft auch in polymergebundener Form eingesetzt werden. Entsprechende Systeme sind kommerziell erhältlich, wie beispielsweise Polydispersion T(VC) D-40 P der Firma Rhein Chemie Rheinau GmbH, D (= polymergebundenes Di-tert.-Butylperoxy-isopropylbenzol).

Weiterhin geeignete Vernetzer sind Schwefel oder Schwefelspender sowie Kombinationen aus diesen Komponenten.

Schwefel kann als löslicher oder unlöslicher Schwefel, als Abmischung daraus (pulverförmig, gecoated) oder in anderer geeigneter Form eingesetzt werden, z.B. als vorgemischte Mischung aus Schwefel und Kautschuk "Schwefelbatch". Die Dosierung liegt in der Regel im Bereich von 0,1 bis 5 phr, vorzugsweise 0,1 bis 1,5 phr.

Als Schwefelspender kommen in der Regel Derivate des Thiurams in Frage, insbesondere Tetramethythiuramdisulfid, Tetraethylthiuramdisulfid, Tetrabutylthiuramdisulfid und Tetrabenzylthuramdisulfid in Betracht. Diese können wiederum in Kombination mit anderen schwefelhaltigen Komponenten verwendet werden, zum Beispiel Dithiomorpholid Dithiocaplolactam oder anderen Verbindungen mit di-, tri-, tetra- oder poly-Sulfidstruktur.

Die Dosierung der Thiuramderivate liegt üblicherweise im Bereich von 0,5 bis 5 phr, vorzugsweise 1 bis 2,5 phr. Die Dosierung der ergänzenden schwefelhaltigen Komponenten ist in der Regel im Bereich von 0,1 bis 3 phr, vorzugsweise 0,5 bis 1,5 phr zu wählen.

Schwefelvernetzungssysteme können außerdem Beschleuniger enthalten. In Frage kommen vorzugsweise Beschleuniger vom Typ Mercaptobenzothiazol oder Mercapto-Benzothiazyldisulfid mit Dosierungen in der Regel im Bereich von 0,5 bis 3 phr, vorzugsweise 0,5 bis 1,5 phr oder sogenannte Sulfenamide wie zum Beispiel Cyclohexyl-Benzo-Thiazylsulfenamid (CBS), Tert-Butyl-Benzothiazylsulfenamid (TBBS), Morpholin-Benzothazylsulfenamid (MBS), Dibenzylbenzothiazylsulfenamid (DCBS), wobei diese üblicherweise in Dosierungen im Bereich von 0,5 bis 3, bevorzugt 0,5 bis 1,5 phr eingesetzt werden.

Ferner kann es vorteilhaft sein folgende Zusätze einzusetzen:
- Zinksalze von Dithiocarbaminsäuren in Dosierungen im Bereich von 0,5 bis 1,5 phr.
- Derivate der Dithophosphorsäure, Guanidine und andere in der Gummiindustrie übliche aminische Beschleuniger.
- Retarder, wie Phthalsäure, Phthalsäureanhydrid, Benzoesäure oder Salizylsäure oder andere organische Säuren, wie N-Nitroso-Verbindungen oder wie N-Cyclohexylthiophthalimid oder andere Sulfonamid-Derivate, wie Vulkalent E/C der Bayer AG.

Die Vernetzung kann auch durch energiereiche Strahlung erzielt werden.

Vernetzung im Sinne der Erfindung bedeutet, dass bei 10-stündiger Extraktion im Soxhlet-Aufsatz mit Toluol als Extraktionsmittel weniger als 10, vorzugsweise weniger als 5 Gew.-%, bezogen auf Kautschuk, extrahierbar ist.

Die optimale Menge an Vernetzer ist durch Vorversuche leicht zu ermitteln. Es ist hierbei bekannt, dass die Menge an notwendigem Peroxid indirekt proportional zum Rest-Doppelbindungsgehalt des Kautschuks ist.

Als Mischorgan kann jedes dem Fachmann bekannte Mischorgan für Kautschuke eingesetzt werden, insbesondere Kneter, Walzen und Schnecken.

Hierbei ist darauf zu achten, dass der Kautschuk während des Mischvorgangs nicht abgebaut wird. Es kann vorteilhaft sein, während des Mischvorgangs zu kühlen. Um Scorch zu vermeiden wird der Vernetzer häufig als letzte Komponente, gegebenenfalls in einem separaten Mischvorgang, zugegeben.

Durch das erfmdungsgemäße Verfahren lassen sich in vorteilhafter Weise verschiedenste Formkörper herstellen.

Vor allem in der Automobil-Industrie eingesetzte erfindungsgemäße Formkörper finden sind in folgenden Einsatzbereichen:

Einsatzbereiche
- Antriebsriemen, Zahn-, Polymer-Riemen
- Dichtungen/Membranen, in verschiedenen Ausführungen O-Ringe, Nutringe 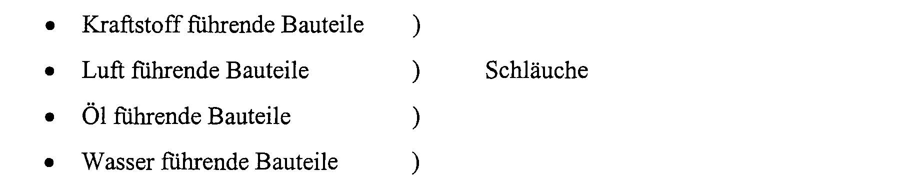
- Heizung/Klima/Lüftung
- Elektrik, Kabelummantelungen
- Zündkerzenstecker
- Manschetten/Staubkappen
- Kupplungsscheiben-Beläge
- Ventildeckel
- Geräuschdämmung
- Lüfter, -zargen und Spannrollen

Überall da, wo Mehrlagensysteme Einsatz von Haftvermittlern oder direkte Gummi-Substrat Haftung auftreten, kommt der erfindungsgemäße polymere Werkstoff mit niedrigem Fettsäuregehalt zum tragen.

Für den Fachmann ist es trivial, die erfindungsgemäßen Mischungen durch Zugabe weiterer Polymere, wie BR, NR, IIR, IR, EPDM, EPM, CR, SBR, AEM, ACM oder Fluorpolymeren, in ihren Eigenschaften exakt maßzuschneidern.

Folgende Beispiele dienen zur Erläuterung der Erfindung, ohne sie einschränken zu wollen.

### Beispiele

### Einsatzstoffe

Therban® A 3406 ist ein HNBR mit 34 % Acrylnitril-Gehalt, einem Mooney-Wert von 68 ME und maximal 0,9 % Restdoppelbindungsgehalt der Bayer AG, Deutschland. Therban® A3406 hat einen Fettsäuregehalt von 0,17 Gew.-% (Messvorschrift siehe Probenpräparation Bestimmung der Gesamtfettsäure).

Therban® A 3467 ist ein HNBR mit 34 % Acrylnitril-Gehalt, einem Mooney-Wert von 68 ME und 5,5 % Restdoppelbindungsgehalt der Bayer AG, Deutschland. Therban® A 3467 hat einen Fettsäuregehalt von 0,14 Gew.-% (Messvorschrift siehe Probenpräparation Bestimmung der Gesamtfettsäure).

Zetpol® 2000 L ist ein HNBR mit 36 % Acrylnitril-Gehalt, einem Mooney-Wert von 65 ME und 0,5 % Restdoppelbindungsgehalt der Nippon Zeon, JP. Zetpol® 2000 L hat einen Fettsäuregehalt von 0,56 Gew.-% (Messvorschrift siehe Probenpräparation Bestimmung der Gesamtfettsäure).

Zetpol® 2020 ist ein HNBR mit 36 % Acrylnitril-Gehalt, einem Mooney-Wert von 78 ME und 7 bis 8 % Restdoppelbindungsgehalt der Nippon Zeon, JP. Zetpol® 2020 hat einen Fettsäuregehalt von 0,79 Gew.-% (Messvorschrift siehe Probenpräparation Bestimmung der Gesamtfettsäure).

Nitrilkautschuk (NBR) A mit 34% und einer Mooney-Viskositaet von 30 M.E. sowie einem Fettsaueregehalt von 0,13% (Messvorschrift siehe Probenpräparation Bestimmung der Gesamtfettsäure).

Nitrilkautschuk (NBR) NBR B mit 34% und einer Mooney-Viskositaet von 30 M.E. sowie einem Fettsaueregehalt von 1,87% (Messvorschrift siehe Probenpräparation Bestimmung der Gesamtfettsäure).

Nitrilkautschuk (NBR) NBR C mit 34% und einer Mooney-Viskositaet von 80 M.E. sowie einem Fettsaueregehalt von 0,09% (Messvorschrift siehe Probenpräparation Bestimmung der Gesamtfettsäure).

Nitrilkautschuk (NBR) NBR D mit 34% und einer Mooney-Viskositaet von 80 M.E. sowie einem Fettsaueregehalt von 2.01% (Messvorschrift siehe Probenpräparation Bestimmung der Gesamtfettsäure).

| | | |
|---|---|---|
| Ruß Corax N 550 | Degussa AG | |
| Russ Regal SRF N 772 | Cabot GmbH | |
| Zinkweiß RS | Zinkweiß ForschungsgmbH | |
| Zinkoxid aktiv | Bayer AG | |
| Stearinsauere | Henkel KGaA | |
| Diplast 8-10 | Lenza Spa | Trimellithsäureester C₈-C₁₀-Alkyl |
| Vulkanol OT | Bayer AG | |
| Naugard 445 | Uniroyal | 4-4'-Bis(1,1-dimethyl-benzyl)diphenylamin |
| Vulkanox ZMB2 | Bayer AG | Derivat von Zinkmercapto-benzothiazole |
| Vulkanox MB2 | Bayer AG | Derivat von Mercapto-benzothiazole |
| Vulkacit NZ/EG | Bayer AG | |
| Vulkacit Thiuram C | Bayer AG | |
| Vulkalent EC | Bayer AG | |
| Rhenocure IS 60/G75 | | |
| Perkadox 14/40B | AKZO | 1.3(1.4)Bis(2-tetär-butyl-peroxyisopropyl)benzol |
| Maglite DE | | Magnesiumoxid |
| Polydispersion T (VC) D-40 P | Rhein Chemie Rheinau GmbH | Di(tButyl-peroxiisopropyl)-benzol, Polymergebunden |
| Vulkanox® BHT | Bayer AG | phenolisches Antioxidant |
| Vulkanox® BKF | Bayer AG | mehrkerniges phenolisches Antioxidant |
| Rhenofit® TRIM/S | Rhein Chemie Rheinau GmbH | Trimethylolpropantri-methacrylat 70 %/gebunden an 30 % Kieselsäure |

| Messmethoden | | | |
|---|---|---|---|
| **Wert** | | **Eigenschaften** | **Prüfnorm** |
| | Dimension | | |
| ML-1+4/100°C | ME | Viskosität nach Mooney | DIN 53523 Teil 3 |
| MS-T5/120°C | min | Anvulkanisationsverhalten | DIN 53523 Teil 4 |
| bzw. 140°C | | nach Mooney (Zeit für 5 ME | |
| | | über Minimum) | |
| MDR-Rheometer | | Vulkanisationsverlauf | DIN 53529 Teil 3 |
| Minimum bzw. | S'dNm | Drehmoment-Minimum- | |
| Maximum bzw. | | Maximum, bzw. Differenz Max./Min. | |

| MAX-Min | | | |
|---|---|---|---|
| T10,T50,T80,T90 | min | Zeit für 10%, 50 %, 80 %, 90 | |
| | | % Umsatz | |
| F | MPa | Zugfestigkeit | DIN 53504 |
| D | % | Bruchdehnung | DIN 53504 |
| S xxx | MPa | Spannungswert bei xxx % | DIN 53504 |
| | | Dehnung | |
| H | Shore A/D | Härte | DIN 53505 |
| E | % | Rückprall-Elastizität | DIN 53512 |
| Abrieb | cm³ | Abrieb | DIN 53516 |
| DVR | % | Druckverformungsrest | DIN 53517 |
| | | | Probekörper II |

| HL-Alterung | | Alterung in Heißluft | |
|---|---|---|---|
| Delta F, Delta D, | % bzw. | Änderung von Zugfestigkeit, | DIN 53508 |
| Delta H | Shore A/D | Bruchdehnung, Härte | |
| Fettsäuregehalt | Gew.-% | | GC-Methode |
| | | | (siehe unten) |

| GC-Methode | | | |
|---|---|---|---|
| Gerät: | Agilent 6890 mit FID | | |
| Kapilarsäule: | Permabond FFAP-DF-0,25 m*0,32 mm ID | | |
| Temperaturen | | | |
| Injektor: | 240°C | | |
| Detektor: | 240°C | | |
| Ofen: | 220°C, isotherm | | |

### Probenpräparation

### Bestimmung der Gesamtfettsäure

Es werden 4 bis 5 g (auf 0,01 g genau) der zu untersuchenden Mischung in 20 ml Toluol und 20 ml THF gelöst. Die Lösung wird mit 100 µl H₃PO₄ sowie mit 5 ml Standardlösung versetzt. Nach 1,5 h Reaktionszeit wird die Lösung mit 60 ml Methanol ausgefällt. Gegebenenfalls werden 20 ml der Extraktlösung unter Stickstoff getrocknet und mit 2 ml Methanol versetzt. Die Lösung wird durch Überführung in ein neues Probenfläschchen vom Polymer abgetrennt und erneut unter Stickstoff getrocknet. Konzentrationsabhängig wird der Rückstand mit 500 µl, 1000 µl oder 2000 µl Toluol versetzt.

### Beispiele 1 bis 4

Die in Tabelle 1 aufgeführten Mischungen wurden hergestellt, wobei jeweils die Rezepturbestandteile auf 100 Teile Kautschuk angegeben sind.

**Tabelle 1**

| **Einsatzstoffe** | **Beispiel 1** | **Beispiel 2** | **Beispiels 3** | **Beispiel 4** |
|---|---|---|---|---|
| Therban® A3406 | 100 | | | |
| Therban® A3467 | | 100 | | |
| Zetpol® 2000L | | | 100 | |
| Zetpol® 2020 | | | | 100 |
| Ruß Corax N 550 | 50 | 50 | 50 | 50 |
| Zinkweiß RS | 5 | 5 | 5 | 5 |
| Diplast 8-10 | 5 | 5 | 5 | 5 |
| Naugard 445 | 1,5 | 1,5 | 1,5 | 1,5 |
| Vulkanox ZMB2 | 1 | 1 | 1 | 1 |
| Perkadox 14/40 B-GR | 8 | 8 | 8 | 8 |

Die Mischungsherstellung erfolgte in einem Laborkneter GK 1,5 E (Fa. Krupp Elastomertechnik, Hamburg), Kühlwassertemperatur 50°C, Schaufeldrehzahl 50 UPM, Stempeldruck 6 bar, Kneterfüllgrad 70 bis 80 % bezogen auf das Kammervolumen des Kneters.

**Mischfolge:** Kautschuk vorlegen, nach 1 min. Laufzeit restliche Bestandteile zugeben, Entleeren des Kneters bei einer Batchtemperatur von >125°C. Das Peroxid wurde auf einem Walzwerk (Fa. Krupp Elastomertechnik) bei 40°C Kühlwassertemperatur nachgemischt.

Die Platten für die Bestimmung der mechanischen Eigenschaften wurden in einer Vulkanisierpresse (Fa. Krupp Elastomertechnik) bei 180°C auf t 90 +5 Minuten vernetzt/vulkanisiert.

Tabelle 2 zeigt die Energieaufnahme während der Mischung und die sog. BIT (black incorporation time), welche als Einmischzeit des Rußes übersetzt werden kann. Die BIT ist definiert als die Zeitdifferenz zwischen Maxima der Leitfähigkeit bis zum Maxima der Energieaufnahme der Mischung.

**Tabelle 2**

| **Beispiel** | **Ruß-Dispersion*** | **Energieaufnahme**** | **BIT***** |
|---|---|---|---|
| 1 | 98 % | 15,3 | 44 |
| 2 | 98 % | 15,4 | 48 |
| 3 | 98 % | 15,8 | 56 |
| 4 | 98 % | 15,8 | 56 |

| | | | |
|---|---|---|---|
| * optisch bestimmt an Glanzschnitten im Auflichtverfahren bei 150-facher Vergrößerung | | | |
| ** maximale Energieaufnahme in KW | | | |
| *** in sec. | | | |

Aus Tabelle 2 wird die signifikante Verkürzung der Einmischzeit und die geringere Energieaufnahme der HNBR-Proben mit geringerem Fettsäuregehalt offensichtlich. Diese vorteilhafte Verkürzung hat keinen Einfluss auf das Eigenschaftsprofil der aus den Mischungen hergestellten Vulkanisate, da eine identische Ruß-Dispersion der Mischung erreicht wird.

Dies zeigt Tabelle 3.

Die Ergebnisse der physikalischen Prüfungen sind in Tabelle 3 wiedergegeben.

**Tabelle 3**

| | **Beispiel 1** | **Beispiel 2** | **Beispiel 3** | **Beispiel 4** |
|---|---|---|---|---|
| F in MPa | 27,8 | 26,8 | 25,7 | 28,1 |
| D in % | 374 | 298 | 409 | 305 |
| S 100 in MPa | 4,0 | 5,5 | 4,3 | 5,5 |
| S 200 in MPa | 13,2 | 17,0 | 12,2 | 17,7 |
| S 300 in MPa | 22,5 | 27,1 | 20,2 | 27,5 |
| H 23°C als Shore A | 70 | 73 | 72 | 74 |
| E in % | 66,5 | 70,5 | 65,8 | 71,2 |
| Weiterreißwiderstand in N/mm | 17,5 | 13,7 | 21,9 | 13,5 |

### Beispiel 5 bis 6

Es wurden folgende Mischungen hergestellt (angegeben sind jeweils Teile).

| **Einsatzstoff** | **Beispiel 5** | **Beispiel 6** |
|---|---|---|
| Therban® A3406 | 100 | |
| Zetpol® 2000L | | 100 |
| Zinkoxid aktiv | 2 | 2 |
| Maglite DE | 2 | 2 |
| Naugard 445 | 1,1 | 1,1 |
| Vulkanox ZMB2 | 0,4 | 0,4 |
| Ruß N550 | 50 | 50 |

Diese Mischungen wurden analog Beispiel 1 in einem Laborkneter GK 90 E (ebenfalls Fa. Krupp Elastomertechnik) hergestellt. Analog Beispiel 1 wurden auf der dort beschriebenen Walze jeweils folgende Stoffe zugesetzt (phr = Teile pro 100 Teile Kautschuk).

Um die Einflüsse unterschiedlicher Additive auf das Formverschmutzungsverhalten zu untersuchen wurden sowohl Typ der Additive als auch die Dosierungsmenge variiert. Die genauen Dosierungsvarianten wurden durch die statistische Versuchsplanung JNP vorgegeben. Diese 20 Variationen waren wie folgt:

### Spritzgussergebnisse DESMA:

unterstrichen = kein, Fettdruck = starke - extreme Formverschmutzung)

| **Polymer A=3406 Polymer B = 2000L** | **AO** | **Dosierung AO** | **Cokatalysator** | **Salt** | **Salt Level** | **AO/ Coagent** |
|---|---|---|---|---|---|---|
| *A 1* | *Vulkanox KB* | *0,1* | *Present* | *Stearic* | *0,5* | *HVA2* |
| *A 2* | *Vulkanox KB* | *0,1* | *Present* | *Stearic* | *1,5* | *DDA70* |
| *A 3* | *Vulkanox KB* | *0,2* | *Present* | *Palmitic* | *1* | *DDA70* |
| *A 4* | *Vulkanox KB* | *0,2* | *Absent* | *Stearic* | *0,5* | *HVA2* |
| *A 5* | *Vulkanox KB* | *0,5* | *Absent* | *Palmitic* | *1,5* | *HVA2* |
| *A 6* | *Vulkanox BKF* | *0,1* | *Absent* | *Palmitic* | *1* | *HVA2* |
| *A 7* | *Vulkanox BKF* | *0,1* | *Absent* | *Palmitic* | *1,5* | *DDA70* |
| ***A 8*** | ***Vulkanox BKF*** | ***0,2*** | ***Present*** | ***Palmitic*** | ***1,5*** | ***HVA2*** |
| *A 9* | *Vulkanox BKF* | *0,5* | *Present* | *Stearic* | *1* | *DDA70* |
| *A 10* | *Vulkanox BKF* | *0,5* | *Absent* | *Stearic* | *0,5* | *DDA70* |
| *B 11* | *Vulkanox KB* | *0,1* | *Present* | *Stearic* | *1,5* | *DDA70* |
| ***B 12*** | ***Vulkanox KB*** | ***0,1*** | ***Absent*** | ***Palmitic*** | ***1*** | ***DDA70*** |
| *B 13* | *Vulkanox KB* | *0,2* | *Absent* | *Stearic* | *1* | *HVA2* |
| *B 14* | *Vulkanox KB* | *0,5* | *Present* | *Palmitic* | *1,5* | *HVA2* |
| ***B 15*** | ***Vulkanox KB*** | ***0,5*** | ***Absent*** | ***Palmitic*** | ***0,5*** | ***DDA70*** |
| *B 16* | *Vulkanox BKF* | *0,1* | *Present* | *Palmitic* | *0,5* | *HVA2* |
| *B 17* | *Vulkanox BKF* | *0,1* | *Absent* | *Stearic* | *1,5* | *HVA2* |
| ***B 18*** | ***Vulkanox BKF*** | *0,2* | ***Present*** | ***Palmitic*** | ***0,5*** | ***DDA70*** |
| *B 19* | *Vulkanox BKF* | *0,2* | *Absent* | *Stearic* | *1,5* | *DDA70* |
| *B 20* | *Vulkanox BKF* | *0,5* | *Present* | *Stearic* | *1* | *HVA2* |

Um die Formverschmutzung zu bewerten wurden Spritzgussversuche an einer DESMA 962 Spritzgussmaschine durchgeführt (Klöckner Ferromatik, D). Sie erlaubt, qualitativ Mischungen in ihrem Exudations- und Formverschmutzungsverhalten zu bewerten.

Für die vorliegende Fragestellung ist die visuelle Beurteilung der vulkanisierten Teile von Bedeutung. Kritische Stellen sind Vorder- und Rückseite im Angussbereich der Form, Zusammenfließstellen hinter den Hindernissen und jenseitiges Formende.

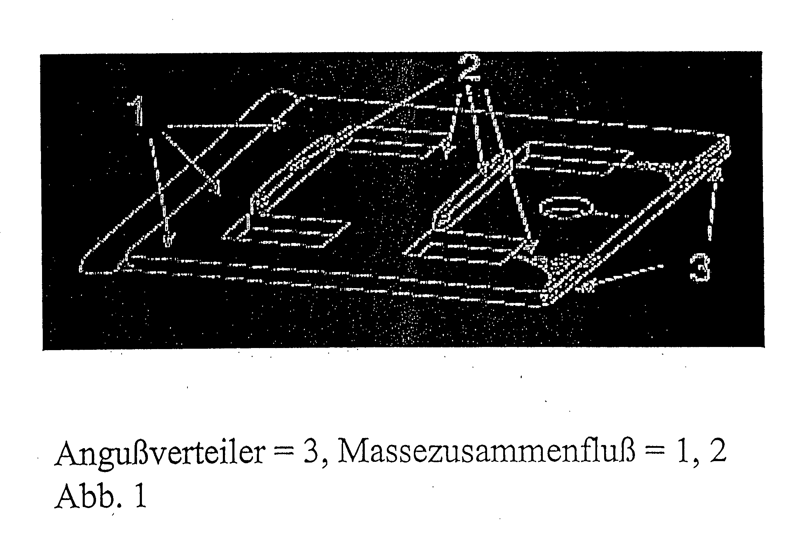

Die Geometrie der Form ist in Abb. 1 dargestellt. Die Formverschmutzung wird an 4 Stellen beurteilt:
AVₒ = Angussverteiler oben
AVᵤ = Angussverteiler unten
MZFₒ = Massezusammenfluss oben
MZFᵤ = Massezusammenfluss unten

Die Beurteilung führt zu einer Kennzahl von 0 (keine Verschmutzung) bis 4 (sehr starke Formverschmutzung).

Hierzu werden jeweils 80 Spritzgussformteile unter den folgenden Parametern aus den Mischungen der Beispiele 5 und 6 hergestellt und die Formen anschließend visuell bewertet:

| **Parameter:** | |
|---|---|
| Formtemperatur | 190°C |
| Heizzeit | 90 sec. |
| Schneckentemperatur | 60°C |
| Zylindertemperatur | 60°C |
| Spritzdruck | 150 bar |
| Staudruck | 8 bar |
| Schneckendrehzahl | 80 % |
| Evakuierungszeit | 10 sec. |

Die Bewertung ist in Tabelle 4 wiedergegeben.

**Tabelle 4**

| | **Beispiel 5** | **Beispiel 6** |
|---|---|---|
| AVₒ | 0,5 | 4 |
| AVᵤ | 1 | 4 |
| MZFₒ | 1 | 4 |
| MZFᵤ | 1,5 | 4 |

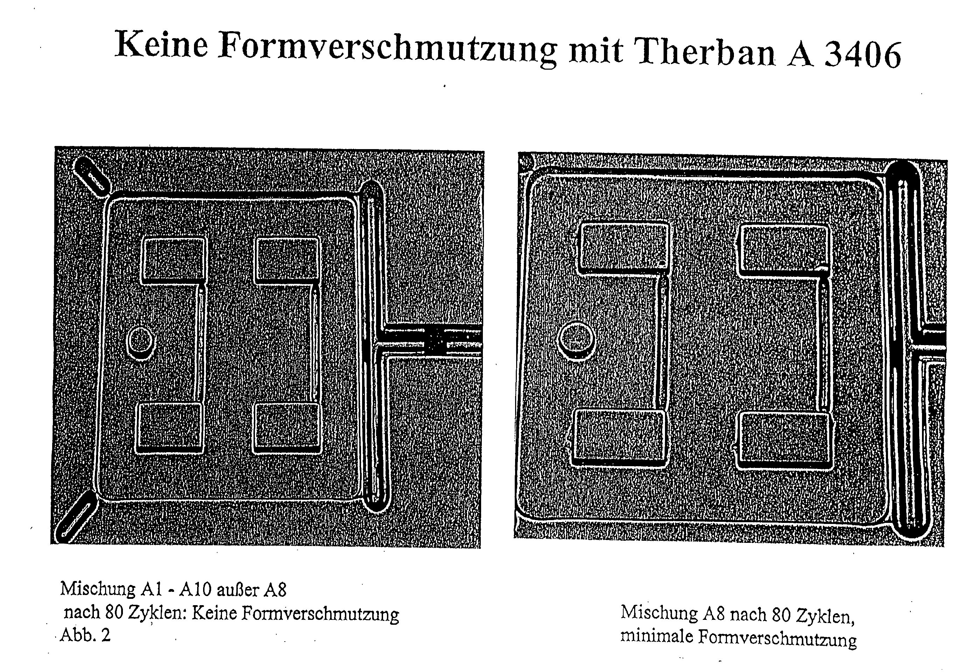

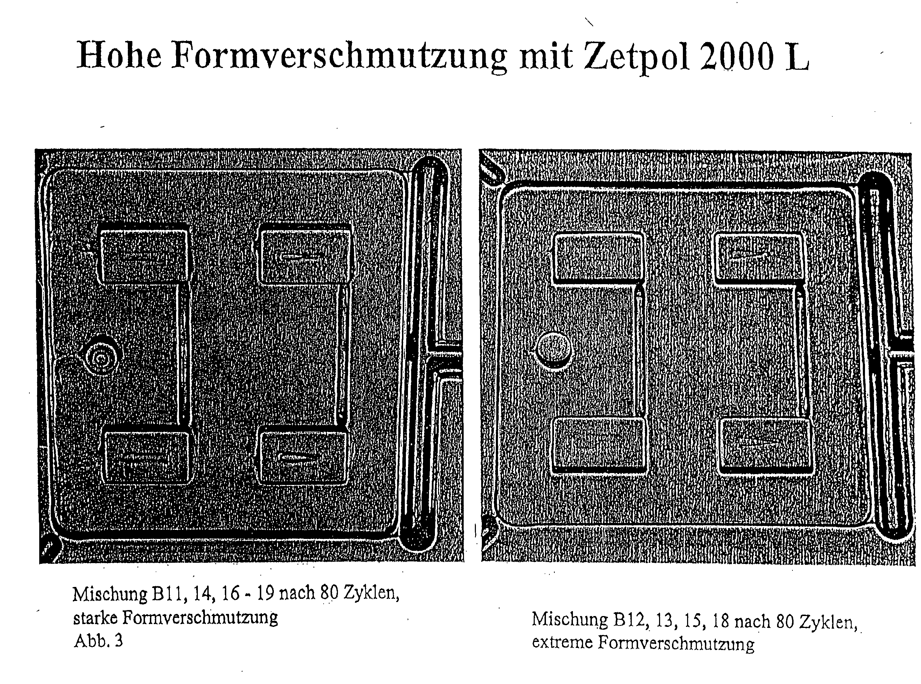

Abb. 2 zeigt die Formen aus Beispiel 5, Abb. 3 aus Beispiel 6.

Man erkennt eine signifikant geringere Formverschmutzung in Beispiel 5 verglichen zu Beispiel 6.

### Beispiele NBR A bis D

Die in Tabelle 5 aufgeführten Mischungen wurden hergestellt, wobei jeweils die Rezepturbestandteile auf 100 Teile Kautschuk angegeben sind.

**Tabelle 5**

| **Einsatzstoffe** | **Beispiel A** | **Beispiel B** | **Beispiel C** | **Beispiel D** |
|---|---|---|---|---|
| NBR A | 100 | | | |
| NBR B | | 100 | | |
| NBR C | | | 100 | |
| NBR D | | | | 100 |
| Ruß Corax N 550 | 30 | 30 | 30 | 30 |
| Ruß Carbot N 772 | 50 | 50 | 50 | 50 |
| Vulkanol HS | 1,5 | 1,5 | 1,5 | 1,5 |
| Vulkanox MB2 | 1,5 | 1,5 | 1,5 | 1,5 |
| Vulkanol OT | 10 | 10 | 10 | 10 |
| Stearinsauere | 0.3 | 0.3 | 0.3 | 0.3 |
| Zinkoxid aktiv | 5 | 5 | 5 | 5 |
| Rhenocure IS60/ G75 (Schwefel) | 0.35 | 0.35 | 0.35 | 0.35 |
| Vulkacit NZ/EG | 1.5 | 1.5 | 1.5 | 1.5 |
| Vulkacit Thiuram C | 1.5 | 1.5 | 1.5 | 1.5 |
| Vulkalent EC | 1 | 1 | 1 | 1 |

Die Mischungsherstellung erfolgte in einem Laborkneter GK 90 E (Fa. Krupp Elastomertechnik, Hamburg), Kühlwassertemperatur 50°C, Schaufeldrehzahl 50 UPM, Stempeldruck 6 bar, Kneterfüllgrad 70 bis 80 % bezogen auf das Kammervolumen des Kneters.

**Mischfolge:** Kautschuk vorlegen, nach 0,5 min. Laufzeit restliche Bestandteile zugeben, Entleeren des Kneters nach 3 min Mischdauer.

Die Platten für die Bestimmung der mechanischen Eigenschaften wurden in einer Vulkanisierpresse (Fa. Krupp Elastomertechnik) bei 160°C auf t 90 +5 Minuten vernetzt/vulkanisiert.

Die Ergebnisse der physikalischen Prüfüngen sind in Tabelle 6 wiedergegeben.

**Tabelle 6**

| | **Beispiel A** | **Beispiel B** | **Beispiel C** | **Beispiel D** |
|---|---|---|---|---|
| F in MPa | 15.9 | 16.3 | 23.1 | 22.2 |
| D in % | 428 | 423 | 417 | 434 |
| S 100 in MPa | 3.4 | 3.9 | 4.6 | 4.3 |
| S 200 in MPa | 8.2 | 9.3 | 12.8 | 11.6 |
| S 300 in MPa | 12.7 | 13.7 | 19 | 17.6 |
| H 23°C als Shore A | 70 | 69 | 72 | 71 |
| Rückprallelastizität in % (23 Grad C) | 30.5 | 32 | 27.8 | 28.4 |

### Formverschmutzungs- und Exudations-Versuche

Unter Exudation soll im folgenden die Migration eines inkompatiblen Mischungsbestandteils verstanden werden, wenn diese Mischung hohen Scherkräften unterworfen werden, wie sie für Spritzgussverfahren typisch sind.

Exudation wird an jedem Zeitpunkt des Spritzgussprozesses beobachtet, d.h. sie ist unabhängig von der Zyklenzahl.

Formverschmutzung bezieht sich auf die Ablagerung von nichtkompatiblen Mischungsbestandteilen auf die Werkzeugoberfläche. Das Ausmaß der Formverschmutzung hängt von der Anzahl der Zyklen ab.

Beide Phänomene sind miteinander verknüpft und lassen sich auf Mischungsbestandteile zurückführen, die unter typischen Prozessbedingungen wie hohen Temperaturen und Scherkräften nur wenig kompatibel mit dem Basispolymer sind, wie z.B. Reste des bei der Poylmerisation verwendeten Emulgators bzw. dessen Salzen.

Die visuelle Beurteilung der Exudationsneigung erfolgt durch Spritzgussversuche, wobei ein Werkzeug nach Benfer und Wenig (Gummi, Asbest, Kuststoffe 45, No. 4, April 1983, Seite 161) verwendet wird, dass aufgrund seiner Auslegung im Angussbereich (1) zu hohen Scherkräften und damit auch zu einer Forcierung der Entmischung, d.h. zu Formverschmutzung führt (DESMA 962 Spritzgussautomat der Fa. Kloeckner Ferromatik) ). Die qualitative Beurteilung wird am Anguss (1) sowie an den Stegen bzw. am Zusammenfluss des Vulkanisats (2+3) (siehe Abb.1) vorgenommen.

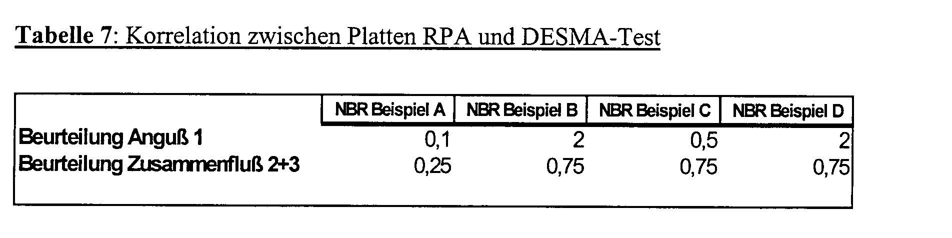

Aus den Daten wird ersichtlich, dass Mischungen, welche auf NBR-Polymerisaten mit geringem Anteil an Restemulgator basieren, eine geringere Tendenz zur Formverschmutzung, insbesondere im Angussbereich (Punkt 1), aufweisen.

## Patentansprüche

1. Verfahren zur Verringerung der Formverschmutzung in Spritzgussverfahren von Nitrilkautschuk, **dadurch gekennzeichnet, dass** man eine Mischung enthaltend einen oder mehrere Nitrilkautschuke und im Bereich von 0,1-0,5 Gew.-% an Fettsäuren sowie gegebenenfalls weitere Additive und/oder Füllstoffe, einsetzt.

2. Verfahren nach Anspruch 1, **dadurch gekennzeichnet, dass** der/die Nitrilkautschuke ausgewählt sind aus der Gruppe NBR, teilhydrierter NBR und vollhydrierter NBR oder Gemische aus zwei oder mehr der Gruppenmitglieder.

3. Verfahren nach Anspruch 1 oder 2, **dadurch gekennzeichnet, dass** die Fettsäure eine geradkettige Fettsäure ist.

4. Verfahren nach einem oder mehreren der Ansprüche 1 oder 3, **dadurch gekennzeichnet, dass** die Fettsäure eine Fettsäure mit 16 oder 18 Kohlenstoffatomen oder ein Gemisch aus diesen ist.

5. Verfahren nach einem oder mehreren der Ansprüche 1 bis 4, **dadurch gekennzeichnet, dass** die Mischung weiterhin einen silikatischen Füllstoff, Ruß, Zinkoxid, Magnesiumoxid oder ein Gemisch aus zwei oder mehr dieser Komponenten enthält.

6. Verfahren nach einem oder mehreren der Ansprüche 1 bis 5, **dadurch gekennzeichnet, dass** die Mischung Vulkanisationsverzögerer und/oder Vulkanisationsbeschleuniger enthält.

7. Formkörper erhältlich in einem Verfahren gemäß einem der Ansprüche 1 bis 5.
